Europäisches Patentamt

European Patent Office

Office européen des brevets

(11) Veröffentlichungsnummer: **0 373 475**

**A1**

## (12) EUROPÄISCHE PATENTANMELDUNG

(21) Anmeldenummer: 89122353.9

(22) Anmeldetag: 04.12.89

(51) Int. Cl.⁵: **G02F 1/1337**

(30) Priorität: 08.12.88 DE 3841302

(43) Veröffentlichungstag der Anmeldung:
20.06.90 Patentblatt 90/25

(84) Benannte Vertragsstaaten:
**DE FR GB IT NL**

(71) Anmelder: **Nokia Unterhaltungselektronik (Deutschland) GmbH
Östliche Karl-Friedrich-Strasse 132
D-7530 Pforzheim(DE)**

(72) Erfinder: **Thaler, Helmut
Limburgstrasse 97
D-7311 Dettingen(DE)**
Erfinder: **Brosig, Stefan, Dr.
Teckstrasse 51 B
D-7000 Stuttgart(DE)**
Erfinder: **Stoitzner, Monika
Ottilie-Wildermuth-Strasse 7
D-7440 Nürtingen(DE)**

(54) **Verfahren zur Erzeugung von Mikrorillen in einer Orientierungsschicht für Flüssigkristalle und eine Vorrichtung zur Durchführung des Verfahrens.**

(57) Es wird ein Verfahren zur Erzeugung von Mikrorillen in einer Orientierungsschicht für Flüssigkristalle angegeben, bei dem eine mit Faserstückchen (5) versehene Reibvorrichtung über die zu bearbeitende Schicht geführt wird. Die Faserstückchen (5) bilden die Reibelemente und sind mittels Beflockung auf eine Reibwalze (1) oder eine Reibbürste aufgebracht.

Die Verwendung derartiger Reibvorrichtungen ermöglicht die Erzeugung geriebener, homogener Mikrorillen.

FIG.2

EP 0 373 475 A1

## Verfahren zur Erzeugung von Mikrorillen in einer Orientierungsschicht für Flüssigkristalle und eine Vorrichtung zur Durchführung des Verfahrens

Die Erfindung betrifft ein Verfahren zur Erzeugung von Mikrorillen in einer Orientierungsschicht für Flüssigkristalle gemäß dem Oberbegriff von Anspruch 1 und eine Vorrichtung zur Durchführung des Verfahrens gemäß dem Oberbegriff von Anspruch 2.

Zur Ausrichtung der Flüssigkristallmoleküle einer Flüssigkristallzelle weist diese zwei Orientierungsschichten auf. Diese Orientierungsschichten sind in der Regel mit Mikrorillen versehen, die entweder aufgedampft oder durch Reiben erzeugt werden. Beim Reiben, wie in der DE-OS 25 29 342 beschrieben, wird mit einem Tuch, einem Filterpapier oder Leder stets in die gleiche Richtung gerieben, wodurch die Mikrorillenstruktur in der Orientierungsschicht entsteht.

Üblicherweise sind die Reibmittel, wie Tuch, Filterpapier oder Leder, auf der Mantelfläche einer Walze oder auf einer Seite einer Bürste aufgebracht.

Die Benützung einer solchen Bürste oder Walze weist den Nachteil auf, daß die Struktur des verwendeten Tuchs, Filterpapiers oder Leders beim Reiben der Mikrorillen auf die Orientierungsschicht übertragen wird.

Der Erfindung liegt nun die Aufgabe zugrunde, ein Verfahren zu schaffen, das die Erzeugung von geriebenen homogenen Mikrorillen ermöglicht.

Die Aufgabe wird bei einem gattungsgemäßen Verfahren und einer gattungsgemäßen Vorrichtung durch die kennzeichnenden Merkmale der Ansprüche 1 und 2 gelöst. Weitere Ausgestaltungen der Erfindung sind den übrigen Ansprüchen und dem Rest der Beschreibung zu entnehmen.

Ein besonderer Vorteil der Erfindung liegt darin, daß die Reibelemente, je nach Wunsch, aus unterschiedlichen Materialien und Formen verwendet werden können und daß die Anordnungen der Reibelemente nicht durch einen Kleberand, wie ihn z.B. eine mit Samttuch bespannte Reibwalze aufweist, gestört wird.

Ausführungsbeispiele des erfindungsgemäßen Verfahrens und der erfindungsgemäßen Vorrichtung werden im folgenden zum Teil anhand der Figuren 1 bis 3 beschrieben. Die Figuren zeigen:

Fig. 1 den Längsschnitt einer erfindungsgemäßen Reibwalze,

Fig. 2 die Seitenansicht der Reibwalze nach Fig. 1, und

Fig. 3 den Schnitt einer erfindungsgemäßen Reibbürste.

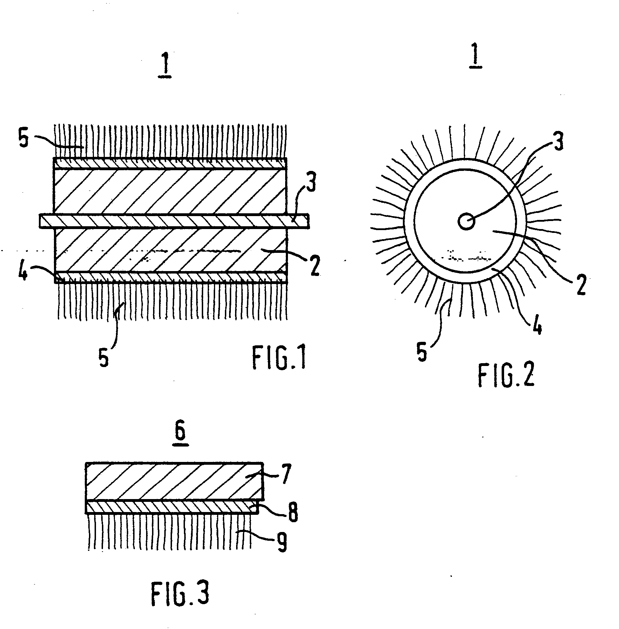

In Fig. 1 ist eine erfindungsgemäße Reibwalze 1 im Schnitt abgebildet. Die Reibwalze 1 weist einen Walzenkörper 2 mit dazugehöriger Drehachse 3 auf. Auf der Mantelfläche des Walzenkörpers 2 befindet sich eine Klebstoffschicht 4, in der Faserstückchen 5 als Reibelemente eingebettet sind. Die Faserstückchen 5 stehen jeweils im rechten Winkel zur Manteloberfläche, wie dies der Fig. 2 zu entnehmen ist.

Die erfindungsgemäße Reibvorrichtung kann auch als Reibbürste 6 ausgebildet sein (Fig. 3). Hier ist auf einem planaren Basiskörper 7 ebenfalls eine Klebstoffschicht 8 aufgebracht, in der die Faserstückchen 9 eingebettet sind.

Der Walzenkörper 2 und der Basiskörper 7 können aus Kunststoff, Metall oder auch aus anderen Werkstoffen bestehen. Die Klebstoffschicht 4 besteht aus einem temperaturgehärteten Epoxidharz. Die Schichtdicke hängt von der Art der Reibelemente ab. Bei der Verwendung von Faserstückchen 5 mit einer Länge von 2 mm ist z.B. eine Klebstoffschichtdicke von 1 mm aufgetragen. Wenn die Mantelfläche des Walzenkörpers 2 aus einem nicht oder schlecht elektrisch leitenden Material besteht, werden zur Durchführung des Beflockungsprozesses der Klebstoffschicht leitfähige Zusätze beigemengt. Alternativ hierzu kann die Mantelfläche eines nicht leitenden Walzenkörpers 2 mit einer elektrisch leitenden Schicht versehen werden, auf der die Klebstoffschicht 4 angeordnet ist. Bei einer Reibbürste 6 verhält sich dies analog.

Als Reibelemente sind Faserstückchen 5, 9 aus Polyamid-6,6 oder Baumwolle angeordnet. Die Faserlänge liegt günstigerweise unter 5 mm, sie kann aber auch 2 cm übersteigen. Der Durchmesser liegt zwischen 5 bis 30 Mikrometer.

Da der Beflockungsprozeß an und für sich bekannt ist, wird er nur kurz anhand der Herstellung der Reibwalze 1 beschrieben. Die Mantelfläche eines metallischen Walzenkörpers 2 wird mit einer 1 mm dicken Epoxidharzschicht versehen, drehbar gelagert und unter einem Sieb angeordnet, in dem sich 2 mm lange Baumwollfaserstückchen befinden. Zwischen Sieb und Walzenkörper 7 wird eine elektrische Spannung angelegt, so daß ein inhomogenes elektrisches Feld mit dem Gradienten in Richtung des Walzenkörpers 7 entsteht. Die Faserstückchen 5 rieseln zunächst aus dem Sieb heraus, richten sich parallel zu den elektrischen Feldlinien aus und werden in Richtung des Walzenkörpers 2 beschleunigt. Die Faserstückchen 5 dringen dabei in die Epoxidharzschicht des Walzenkörpers ein. Während des Rieselns dreht sich der Walzenkörper 7 um seine eigene Achse. Der Vorgang wird beendet, wenn die gewünschte Dichte von Faserstückchen 7 erreicht ist. Im nächsten Schritt wird die Epoxidharzschicht thermisch gehärtet.

Zur Erzeugung der Mikrorillen in Orientierungsschichten für Flüssigkristalle wird die Reibwalze 1 und die mit Mikrorillen zu versehende Schicht bewegt. Die Reibwalze 1 dreht sich dabei entgegengesetzt zur Translationsrichtung. Bei der Vewendung der Reibbürste 6 wird diese ein oder mehrere Male in der gleichen Richtung über die Schicht geführt.

Bezugszeichenliste

   1 Reibwalze
   2 Walzenkörper
   3 Drehachse
   4 Klebstoffschicht
   5 Faserstückchen
   6 Reibebürste
   7 Basiskörper
   8 Klebstoffschicht
   9 Faserstückchen

## Ansprüche

1. Verfahren zur Erzeugung von Mikrorillen in einer Orientierungsschicht für Flüssigkristalle durch Reiben, **dadurch gekennzeichnet**, daß das Reiben mittels einer aufgeflockte Reibelemente aufweisenden Reibvorrichtung erfolgt.

2. Reibvorrichtung zur Erzeugung von Mikrorillen in einer Orientierungsschicht für Flüssigkristalle, dadurch gekennzeichnet, daß sich auf einer Fläche der Reibvorrichtung eine Klebstoffschicht (4) befindet, auf die die Reibelemente aufgeflockt sind.

3. Reibvorrichtung nach Anspruch 2, dadurch gekennzeichnet, daß die Reibelemente als Faserstückchen (5, 9) ausgebildet sind, die jeweils zu dem Flächenteil, auf dem sie sich befinden, vorzugsweise senkrecht ausgerichtet sind.

4. Reibvorrichtung nach Anspruch 3, dadurch gekennzeichnet, daß die Faserstückchen (5, 9) eine Länge zwischen 1 mm und 5 mm aufweisen.

5. Reibvorrichtung nach Anspruch 2, dadurch gekennzeichnet, daß sie als Reibwalze (1) ausgebildet ist.

<u>1</u>

5

3

4

2

5

**FIG.1**

<u>1</u>

3

2

4

5

**FIG.2**

<u>6</u>

7

8

9

**FIG.3**

H.Thaler 3·
8. 11. 8ε

| | Europäisches Patentamt | **EUROPÄISCHER RECHERCHENBERICHT** | Nummer der Anmeldung |
|---|---|---|---|

EP 89122353.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | <u>DE - A1 - 2 529 342</u><br>(SHARP)<br>   * Seite 3, Zeilen 1-31;<br>     Fig. 3,8,12,13 *<br>       -- | 1-3,5 | G 02 F 1/1337 |
| A | PATENT ABSTRACTS OF JAPAN,<br>unexamined applications,<br>Sektion P, Band 11, Nr. 68,<br>28. Februar 1987<br>THE PATENT OFFICE JAPANESE<br>GOVERNMENT<br>Seite 144 P 553<br>   * Kokai-Nr. 61-232 418<br>     (TOSHIBA CORP.) *<br>      -- | 1-3,5 | |
| A | PATENT ABSTRACTS OF JAPAN,<br>unexamined applications,<br>Sektion P, Band 11, Nr. 386;<br>17. Dezember 1987<br>THE PATENT OFFICE JAPANESE<br>GOVERNMENT<br>Seite 155 P 647<br>   * Kokai-Nr. 62-153 828<br>     (ASAHI GLASS) *<br>      -- | 1-3 | |
| A | <u>EP - A2 - 0 046 401</u><br>(ITT)<br>   * Zusammenfassung; Seite 4,<br>     Zeile 30 - Seite 5, Zeile<br>     27 *<br>      -- | 1-3 | |
| A | <u>DE - A1 - 3 150 830</u><br>(CANON)<br>   * Zusammenfassung; Seite<br>     37, Zeilen 23-36 *<br>      ---- | 1,2,4 | |

**RECHERCHIERTE SACHGEBIETE (Int Cl⁵)**

G 02 F

Der vorliegende Recherchenbericht wurde für alle Patentansprüche erstellt.

| Recherchenort | Abschlußdatum der Recherche | Prüfer |
|---|---|---|
| WIEN | 27-03-1990 | GRONAU |